# EUROPÄISCHE PATENTANMELDUNG

(11) **EP 4 706 981 A1**
(43) Veröffentlichungstag der Anmeldung: **11.03.2026**
(21) Anmeldenummer: 25195436.8
(22) Anmeldetag: 12.08.2025
(51) Int. Cl.: B60C 1/00, B60C 11/03, B60C 11/04, B60C 11/12, C08L 7/00

(54) **FAHRZEUGREIFEN**

(30) Priorität: 05.09.2024 DE 102024208471
(71) Anmelder: Continental Reifen Deutschland GmbH, 30175 Hannover (DE)
(72) Erfinder: Peters, Klaus, 30175 Hannover (DE); Große, Julia, 30175 Hannover (DE); Eikermann, Wilke, 30175 Hannover (DE)
(74) Vertreter: Continental Corporation

(57) **Zusammenfassung**

Die Erfindung betrifft einen Fahrzeugreifen mit einem Laufstreifen (1) mit einer von einer Umfangsrille (5) begrenzten Profilrippe (2),
wobei die Umfangsrille (5) aus einem radial äußeren Abschnitt (7) mit einer minimalen Breite (bₘᵢₙ) von 0,40 mm bis 3,00 mm und einem radial inneren Kanal (8) zusammengesetzt ist,
wobei die Profilrippe (2) mit in die Umfangsrille (5) einmündenden Einschnitten (13, 13') versehen ist.

Das radial äußere Einschnitttiefenniveau (N_{Emin}) liegt am oder radial innerhalb des mittleren Umfangsrillenniveaus (N_{bmax}) sowie radial außerhalb des tiefstes Umfangsrillenniveaus (N_{P}),
wobei das die Profilierung enthaltende Gummimaterial (1a) des Laufstreifens (1)
a) eine Rückprallelastizität bei 23°C (R (23°C)), ermittelt nach ISO 4662, von 43,0 bis 59,0,
b) eine Rückprallelastizität bei 70°C (R (70°C)), ermittelt nach ISO 4662, von 60,0 bis 75,0 und
c) einen Verlustfaktor bei 70°C (tan d (70°C)), ermittelt nach ISO 4664-1, von 0,060 bis 0,120 aufweist.

## Beschreibung

Die Erfindung betrifft einen Fahrzeugreifen, insbesondere Nutzfahrzeugreifen, mit einem profilierten Laufstreifen umfassend ein die Profilierung enthaltendes Gummimaterial sowie mit mindestens einer an zumindest einer Seite von einer Umfangsrille begrenzten Profilrippe,
wobei die Umfangsrille, im Querschnitt betrachtet, aus einem radial äußeren Abschnitt mit einer minimalen Breite von 0,40 mm bis 3,00 mm und einem radial inneren Kanal zusammengesetzt ist und eine ein tiefstes Umfangsrillenniveau festlegende, in radialer Richtung ermittelte, maximale Tiefe von 70% bis 100% der Profiltiefe aufweist,
wobei der radial innere Kanal eine größere Querschnittsfläche als der radial äußere Abschnitt, eine in radialer Richtung ermittelte Erstreckungslänge und eine breiteste Stelle auf einem mittleren Umfangsrillenniveau aufweist, wobei die breiteste Stelle eine parallel zur Laufstreifenperipherie ermittelte Breite von 150% bis 650% der minimalen Breite und das mittlere Umfangsrillenniveau zum tiefsten Umfangsrillenniveau in radialer Richtung einen Abstand von 35% bis 85% der Erstreckungslänge des radial inneren Kanals aufweist,
wobei die Profilrippe mit in die Umfangsrille einmündenden Einschnitten versehen ist, welche eine Breite 0,40 mm bis 2,00 mm, eine an der bzw. den tiefste(n) Stelle(n) vorliegende, maximale Tiefe von 80% bis 110% der maximalen Tiefe der Umfangsrille, eine an der bzw. den seichteste(n) Stelle(n) vorliegende, minimale Tiefe auf einem radial äußeren Einschnitttiefenniveau, einen Einschnittgrund, zumindest einen auf die maximale Tiefe reichenden, tiefsten Einschnittabschnitt und zumindest einen seichten Einschnittabschnitt mit einem am radial äußeren Einschnitttiefenniveau verlaufenden, angehobenen Grundabschnitt des Einschnittgrunds aufweisen.

Ein derartiger Fahrzeugreifen ist beispielsweise aus der DE 10 2021 205 792 A1 bekannt. Dieser Fahrzeugreifen weist einen Laufstreifen mit zumindest einer Profilrippe und eine diese seitlich begrenzende, auf Profiltiefe reichende Umfangsrille auf. Die Umfangsrille weist, im Querschnitt betrachtet, einen radial äußeren Abschnitt mit einer minimalen Breite von bis zu 3,00 mm und einem radial inneren Kanal mit einer Breite an der breitesten Stelle von 5,00 mm bis 7,00 mm auf. Die breiteste Stelle befindet sich auf einem mittleren Umfangsrillenniveau, welches zum tiefsten Umfangsrillenniveau in radialer Richtung einen Abstand von 70% bis 85% der Erstreckungslänge des radial inneren Kanals aufweist. In der Profilrippe sind unter einem Winkel von 0° bis 50° zur axialen Richtung verlaufende Einschnitte ausgebildet, welche eine Breite 0,40 mm bis 1,20 mm und eine maximale Tiefe von 70% bis 100% der Profiltiefe aufweisen. Jeder Einschnitt ist mit zumindest einem zur Laufstreifenperipherie offenen, in den radial inneren Kanal einmündenden Einschnittkanal versehen, welcher beim Abrollen auf nasser Fahrbahn einen Wasserableitweg zwischen der Rippenaußenfläche und dem radial inneren Kanal bildet.

Bei Fahrzeugreifen der eingangs genannten Art sind die am Laufstreifen vorgesehenen Umfangsrillen mit einem schmalen, radial äußeren Abschnitt und einem radial inneren Kanal insbesondere für den Rollwiderstand des Reifens von Vorteil, da sich beim Abrollen des Reifens die jeweiligen Profilelemente oder Profilsegmente über den radial äußeren Abschnitt der Umfangsrille aneinander abstützen, was zu einer Verringerung der Rollwiderstandes beiträgt.

Der radial innere Kanal und die Einschnitte tragen zur Entwässerung des Laufstreifens und derart zu Nässeperformance des Reifens bei, wobei im Hinblick auf die Einschnitte vorrangig der auf die maximale Tiefe reichende, tiefste Einschnittabschnitt von Bedeutung ist. Der seichte Einschnittabschnitt ist im Hinblick auf die Nässeperformance nicht optimal, trägt jedoch zu einer Versteifung der Profilrippe und derart zu einem geringen Rollwiderstand bei. Nach Abrieb des Laufstreifens, derart, dass der seichte Einschnittabschnitt nicht länger vorhanden ist, gleicht der nun bis zur Laufstreifenperipherie reichende, radial innere Kanal der Umfangsrille die mit dem verringerten Einschnittvolumen einhergehenden Einbußen in der Nässeperformance zumindest teilweise aus.

Bei Fahrzeugreifen der eingangs genannten Art ist daher der fortlaufend über den Laufstreifenabrieb bestehende ("over lifetime"), zwischen dem Rollwiderstand und der Nässeperformance vorliegende Zielkonflikt auf einem gewissen Niveau "gelöst". Eine Vergrößerung des Profilnegativanteils ist grundsätzlich für die Nässeperformance günstig, für den Rollwiderstand jedoch ungünstig, sodass eine weitere Verbesserung im Hinblick auf den erwähnten Zielkonflikt nicht ohne Weiters zu bewerkstelligen ist.

Der Erfindung liegt die Aufgabe zu Grund, bei einem Fahrzeugreifen der eingangs genannten Art die Nässeperformance und den Rollwiderstand möglichst gleichermaßen weiter zu verbessern, den zwischen diesen Reifeneigenschaften bestehen Zielkonflikt somit auf einem noch höheren Niveau zu lösen.

Gelöst wird die gestellte Aufgabe erfindungsgemäß dadurch,
dass das radial äußere Einschnitttiefenniveau am oder radial innerhalb des mittleren Umfangsrillenniveaus sowie radial außerhalb des tiefstes Umfangsrillenniveaus liegt,
wobei das die Profilierung enthaltende Gummimaterial des Laufstreifens
   a) eine Rückprallelastizität bei 23°C, ermittelt nach ISO 4662, von 43,0 bis 59,0,
   b) eine Rückprallelastizität bei 70°C, ermittelt nach ISO 4662, von 60,0 bis 75,0 und
   c) einen Verlustfaktor bei 70°C, ermittelt nach ISO 4664-1, von 0,060 bis 0,120 aufweist.

Die Lösung basiert somit auf einer Kombination aus geometrischen Profilmerkmalen und das Gummimaterial betreffenden, durch bestimmte Vulkanisateigenschaften ausgedrückten Materialmerkmalen. Die Profilmerkmale sorgen dafür, dass der Einschnitt solange über seine komplette Länge über den Laufstreifenabrieb erhalten bleibt, bis die mit dem mittleren Umfangsrillenniveau korrelierende, breiteste Stelle der Umfangsrille an der Laufstreifenperipherie liegt und der radial innere Kanal somit "komplett" zur Laufstreifenperipherie geöffnet ist. Vor Erreichen dieses Abriebzustands tragen die entsprechend langen Einschnittkanten über Kanten- und Wischeffekte zur Verbesserung der Nässeperformance bei. Ab diesem Abriebzustand sorgt vor allem die Umfangsrille, also deren radial innere Kanal, für eine besonders wirkungsvolle Verbesserung der Nässeperformance. Zusätzlich ist das Gummimaterial der radial äußeren Laufstreifenschicht im Hinblick auf den Zielkonflikt zwischen Rollwiderstand und Nässeperformance optimiert, wobei die Rückprallelastizitäten bei 70°C und der Verlustfaktor bei 70°C bekannterweise Rollwiderstandsindikatoren sind und die Rückprallelastizität bei 23°C ein Nässeperformanceindikator ist.

Zusammenfassend sorgt daher die Kombination aus der auf den Umfangsrillenquerschnitt abgestimmten Einschnittform und dem spezifischen Gummimaterial des Laufsteifens für eine Lösung des erwähnten Zielkonflikts auf einem gegenüber bekannten Fahrzeugreifen deutlich höheren Niveau.

Gemäß einer bevorzugten Ausführung weist das radial äußere Einschnitttiefenniveau zum tiefsten Umfangsrillenniveau einen in radialer Richtung ermittelten Abstand von zumindest 1,00 mm, insbesondere von zumindest 2,00 mm, auf. Folglich tragen die langen Einschnittkanten über einen entsprechenden Laufstreifenabrieb über die Kanten- und Wischeffekte zur Verbesserung der Nässeperformance bei, wobei zusätzlich eine im Hinblick auf den Rollwiderstand günstige, gewisse versteifende Wirkung durch die radial innerhalb des radial äußeren Einschnitttiefenniveaus liegende Grundanhebung aufrecht erhalten bleibt.

Gemäß einer weiteren bevorzugten Ausführung weist das radial äußere Einschnitttiefenniveau zum mittleren Umfangsrillenniveau einen in radialer Richtung ermittelten Abstand von zumindest 1,00 mm auf. Dies ist vor allem für die Nässeperformance günstig.

Im Hinblick auf die Nässeperformance ist es von weiterem Vorteil, wenn die Rückprallelastizität bei 23°C des die Profilierung enthaltenden Gummimaterials des Laufstreifens 45,0 bis 52,0 beträgt.

Im Hinblick auf den Rollwiderstand ist es günstig, wenn die Rückprallelastizität bei 70°C des die Profilierung enthaltenden Gummimaterials des Laufstreifens 66,0 bis 72,0 beträgt.

Der Rollwiderstand ist es ferner dann besonders gering, wenn der Verlustfaktor bei 70°C des die Profilierung enthaltenden Gummimaterials des Laufstreifens 0,070 bis 0,090 beträgt.

Gemäß einer weiteren bevorzugten Ausführung weist der bzw. weisen die seichte(n) Einschnittabschnitt(e) eine bzw. jeweils eine entlang der Einschnittmittellinie ermittelte Länge auf, wobei die Länge des seichten Einschnittabschnitts bzw. die Summe der Längen der seichten Einschnittabschnitte 30% bis 80%, insbesondere 40% bis 70%, bevorzugt zumindest 50%, der entlang der Einschnittmittellinie ermittelten Länge des Einschnitts beträgt. Diese Ausführung verstärkt die erwähnten von den Einschnittkanten hervorgerufenen Kanten- und Wischeffekte, wodurch der Nassgriff und somit die Nässeperformance weiter verbessert ist.

Bevorzugter beträgt der Abstand, welchen das mittlere Umfangsrillenniveau zum tiefsten Umfangsrillenniveau in radialer Richtung aufweist, 50% bis 70% der in radialer Richtung ermittelten Erstreckungslänge des radial inneren Kanals.

Gemäß einer weiteren bevorzugten Ausführung beträgt die in radialer Richtung ermittelte Erstreckungslänge des radial inneren Kanals 35% bis 70%, insbesondere 45% bis 65%, bevorzugt 50% bis 60%, der maximalen Tiefe der Umfangsrille. Dies ist ebenfalls für die Nässeperformance günstig.

In diesem Zusammenhang ist es ferner vorteilhaft, wenn die in radialer Richtung ermittelte Erstreckungslänge des radial inneren Kanals mindestens 75%, insbesondere mindestens 100%, bevorzugt mindestens 105%, besonders bevorzugt mindestens 110%, der Breite an der breitesten Stelle des radial inneren Kanals beträgt.

Gemäß einer weiteren bevorzugten Ausführung ist vorgesehen,
- dass sich die Einschnitte jeweils aus zwei der seichten Einschnittabschnitte und einem zwischen diesen ausgebildeten, tiefsten Einschnittabschnitt zusammengesetzt sind oder
- dass die Einschnitte jeweils aus zwei der tiefsten Einschnittabschnitte und einem zwischen diesen ausgebildeten, seichten Einschnittabschnitt zusammengesetzt sind.

Solche Einschnitte tragen zu einer besonders guten Balance zwischen der Nässeperformance und dem Rollwiderstand bei.

Die Erfindung betrifft ferner eine Kautschukmischung für das die Profilierung enthaltende Gummimaterial des Laufstreifens, welche folgende Bestandteile umfasst:
- Naturkautschuk(e) in einer Gesamtmenge von 70 phr bis 95 phr,
- Styrol-Butadien-Kautschuk(e) und/oder Polybutadien(e) in einer Gesamtmenge von 5 phr bis 30 phr,
- Kieselsäure(n) mit einer BET-Oberfläche von 180 m²/ bis 250 m²/g in einer Gesamtmenge 25 phr bis 70 phr, insbesondere von mindestens 30 phr, bevorzugt von mindestens 40 phr, und
- Silan(e).

Weitere Merkmale, Vorteile und Einzelheiten der Erfindung werden nun anhand der Zeichnung, die schematisch Ausführungsbeispiele der Erfindung zeigt, näher beschrieben. Dabei zeigen
Fig. 1 eine Draufsicht auf einen vereinfachten Umfangsabschnitt eines in die Ebene abgewickelten Laufstreifens eines Nutzfahrzeugreifens mit einer ersten Ausführungsvariante der Erfindung,
Fig. 2 eine vergrößerte Draufsicht auf das Detail Z₂ der Fig. 1,
Fig. 3 einen Schnitt entlang der Linie III-III der Fig. 2,
Fig. 4 eine weiter vergrößerte Ansicht des Details Z₄ der Fig. 3 und
Fig. 5 einen Schnitt analog zur Fig. 3 mit einer zweiten Ausführungsvariante der Erfindung.

Die Erfindung befasst sich mit einem Fahrzeugreifen mit einem Laufstreifen aus einem die Profilierung enthaltenden, spezifischen Gummimaterial (Vulkanisat einer Kautschukmischung), zumindest einer geometrisch speziell ausgeführten Umfangsrille und auf spezifische Weise in diese Umfangsrille abgestimmten Einschnitten. Nachfolgend wird allgemein auf den Fahrzeugreifen (Punkt 1), im Anschluss auf das spezifische Gummimaterial des Laufstreifens (Punkt 2) und schlussendlich auf das Profil des Laufstreifens (Punkt 3) eingegangen.

### 1. Allgemeine Beschreibung des Fahrzeugreifens

Gemäß der Erfindung ausgeführte Fahrzeugreifen sind Reifen für mehrspurige Kraftfahrzeuge, wobei die Fahrzeugreifen insbesondere Nutzfahrzeugreifen, besonders bevorzugt Nutzfahrzeugreifen für Lastkraftwagen (LKWs) oder Busse, sind. Die Fahrzeugreifen sind ferner bevorzugt Fahrzeugluftreifen, insbesondere in Radialbauart. Die Nutzfahrzeugreifen sind vor allem für Felgen mit einem Felgendurchmesser von 17,5, 19,5 oder 22,5 Zoll vorgesehen und weisen einen Traglastindex von bevorzugt > 126 auf.

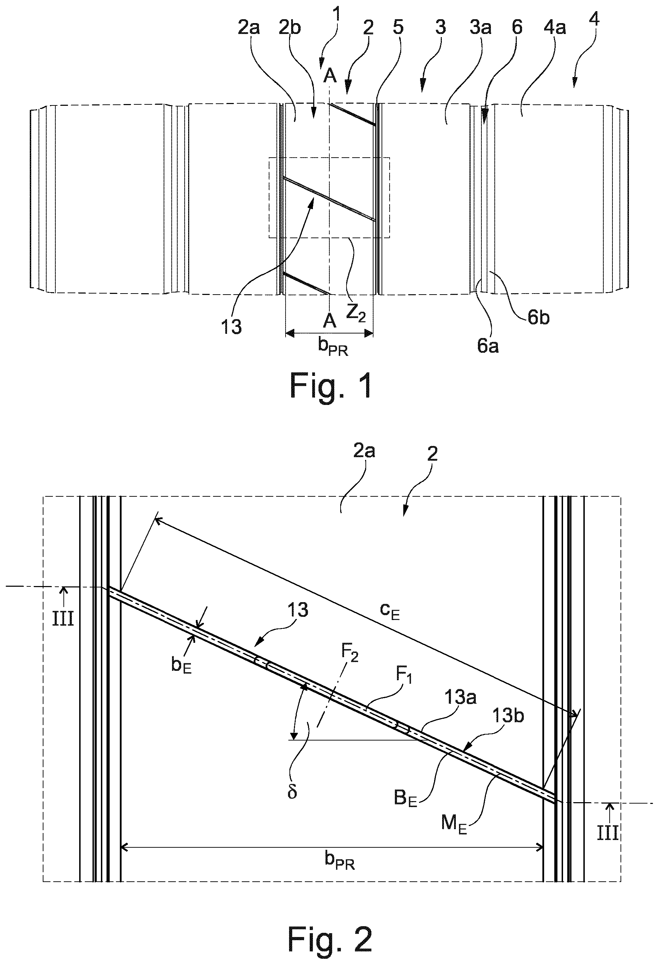

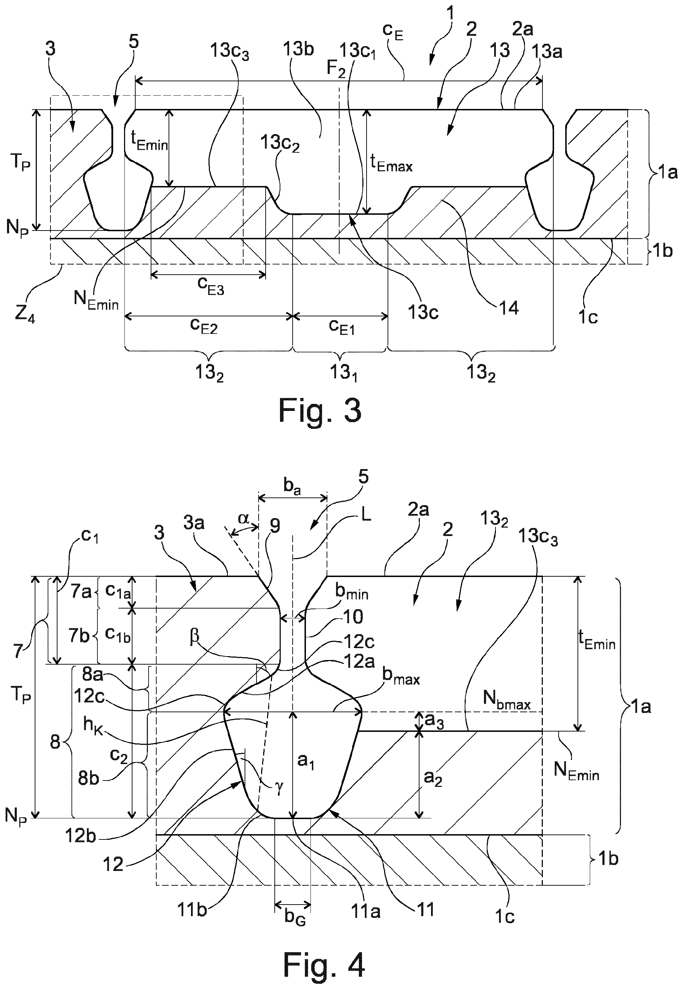

Fig. 1 zeigt eine Draufsicht auf einen vereinfachten Umfangsabschnitt eines Laufstreifens 1 eines Nutzfahrzeugreifens. Die Reifenäquatorialebene ist durch eine Linie A-A angedeutet. Gemäß Fig. 3 setzt sich der Laufstreifen 1 beim gezeigten Ausführungsbeispiel aus einer radial äußeren Laufstreifensicht 1a und einer radial inneren Laufstreifensicht 1b zusammen, wobei sich die komplette Profilierung, welche unter Punkt 3 erläutert wird, innerhalb der radial äußeren Laufstreifenschicht 1a befindet, in diese also eingebettet ist. Die radial äußere Laufstreifenschicht 1a besteht aus dem bereits erwähnten, spezifischen Gummimaterial. Das Gummimaterial der radial inneren Laufstreifenschicht 1b unterscheidet sich von jenem der radial äußeren Laufstreifenschicht 1a, sodass zwischen den Laufstreifenschichten 1a, 1b eine Materialgrenze 1c vorliegt.

### 2. Gummimaterial der radial äußeren Laufstreifenschicht 1a

Das Gummimaterial der radial äußeren Laufstreifenschicht 1a ist im Hinblick auf eine möglichst günstige Balance zwischen dem Rollwiderstand des Fahrzeugreifens und der Nässeperformance des Fahrzeugreifens optimiert.

Tabelle 1 zeigt beispielhaft Rezepte, also Zusammensetzungen von Kautschukmischungen, für das Gummimaterial radial äußeren Laufstreifenschicht 1a. Es sind zwei Kautschukmischungen E1 und E2 angegeben. Die Rezepte sind - wie in der Kautschuktechnologie üblich - auf 100 Teile Kautschuk (phr = parts per hundred parts rubber) bezogen. Die Mengenangaben beziehen sich daher jeweils auf 100 Massenteile des Grundpolymers, also des Kautschuks, bzw. bei Polymerblends - wie sie auch bei den Kautschukmischungen E1 und E2 vorgesehen sind - auf 100 Massenteile der Grundpolymere, also der Kautschuke.

**Tabelle 1: Rezepte**

| **Bestandteil** | **Einheit** | **E1** | **E2** |
|---|---|---|---|
| Naturkautschuk(e) (NR) | phr | 80,00 | 80,00 |
| Styrol-Butadien-Kautschuk(e) (SBR) | | 20,00 | - |
| Polybutadien(e) (BR) | | - | 20,00 |
| Ruß(e) | | 5,00 | 5,00 |
| Kieselsäure(n) | | 54,50 | 50,00 |
| Silan(e) | | 9,50 | 8,70 |
| Sonstige Zusatzstoffe | | 21,00 | 14,00 |
| DPG (N,N'-Diphenylguanidin) | | 1,00 | 1,00 |
| Schwefel, Beschleuniger | | 2,87 | 3,68 |

Die Kautschukmischung umfasst insbesondere folgende Bestandteile:
- 70 phr bis 95 phr Naturkautschuk(e)
- 5 phr bis 30 phr Styrol-Butadien-Kautschuk(e) und/oder Polybutadien(e)
- 25 phr bis 70 phr, insbesondere mindestens 30 phr, bevorzugt mindestens 40 phr, Kieselsäure(n), wobei die Kieselsäure(n) eine BET-Oberfläche von 180 m²/g bis 250 m²/g aufweist bzw. aufweisen
- Silan(e)
- Sonstige Zusatzstoffe:
   Zu diesen zählen insbesondere Weichmacher, Prozesshilfsmittel, Alterungsschutz, UV-Schutz, Ozonschutzmittel, Aktivatoren (Stearinsäure, Zinkoxid).

Nachfolgend wird auf Vulkanisateigenschaften des Gummimaterials der radial äußeren Laufstreifenschicht 1a eingegangen, wobei diese Vulkanisateigenschaften Indikatoren für den Rollwiderstand des Reifens und die Nässeperformance des Reifens sind.

### Indikatoren für den Rollwiderstand (Rollwiderstands-Indikatoren)

Als Indikatoren für den zu erwartenden Rollwiderstand werden die Rückprallelastizität bei einer Temperatur von 70°C (R (70°C)) und der Verlustfaktor bei einer Temperatur von 70°C (tan d (70°C)) herangezogen. Der zu erwartende Rollwiderstand ist umso besser (geringer), je größer die Rückprallelastizität R (70°C) und je kleiner der Verlustfaktor (tan d (70°C)) ist. Für einen geringen Rollwiderstand ist bekannterweise eine geringe "Energievernichtung" beim Abrollen des Reifens erforderlich.

### Indikator für die Nässeperformance (Nässeperformance-Indikator)

Als Indikator für die Nässeperformance wird die Rückprallelastizität bei einer Temperatur von 23°C (R (23°C)) herangezogen, wobei die zu erwartende Nässeperformance umso besser ist, je kleiner die Rückprallelastizität R (23°C) ist. Die Rückprallelastizität R (23°C) ist dabei ein Maß für die Dämpfung, wobei die Dämpfung umso höher ist, je geringer die Rückprallelastizität ist. Bei geringerer Rückprallelastizität (höherer Dämpfung) des beim Abrollen des Reifens mit dem Untergrund in Kontakt tretenden Gummimaterials wird mehr Energie "vernichtet", wodurch die Nässeperformance des Reifens verbessert ist.

Der theoretische Hintergrund zu obigen Indikatoren ergibt sich aus den unterschiedlichen Frequenzeinwirkungen auf das Gummimaterial bei einem auf Nässe (Wasser) bremsenden Fahrzeugreifen und einem freirollendem Fahrzeugreifen (vergl. Williams-Landel-Ferry Transformation, Frequenz-Temperatur Superposition, Temperaturabhängigkeit von

Relaxationsmechanismen).

### Ermittlung der Indikatoren

Die Rückprallelastizitäten R (23°C) und R (70°C) wurden wie folgt ermittelt: Ermittlung nach ISO 4662:
- Elastomere oder thermoplastische Elastomere - Bestimmung der Rückprallelastizität von Vulkanisaten
- Ausgabe 2017-06
- Pendulum method (Pendelprüfung) gemäß Abschnitt 5, Dicke der Prüfkörpers 6,3 mm ± 0,5 mm (siehe Annex A - Use of non-standard test pieces)
- Vulkanisationsparameter (Herstellung der Prüfkörper):
   ∘ Vulkanisationstemperatur: 140°C
   ∘ Vulkanisationszeit: 30 Minuten
- Messparameter:
   ∘ Temperierzeit: 30 Minuten
   ∘ Temperatur (Probekörpertemperatur):
      ▪ 23°C ± 1°C (für R (23°C))
      ▪ 70°C ± 1°C (für R (70°C))

Der Verlustfaktor tan d (70°C) wurde wie folgt ermittelt:
Ermittlung nach ISO 4664-1:
- Elastomere oder thermoplastische Elastomere - Bestimmung der dynamischen Eigenschaften - Teil 1: Grundsätze
- Ausgabe 2022-07
- Vulkanisationsparameter (Herstellung der Prüfkörper):
   ∘ Vulkanisationstemperatur: 140°C
   ∘ Vulkanisationszeit: 30 Minuten
- Messparameter:
   ∘ Messfrequenz:10 Hz
   ∘ Vorkraft: 50 N
   ∘ Amplitudenkraft: 30 N
   ∘ Temperierzeit: 5 Minuten
   ∘ Temperatur: 70°C ± 1°C (Temperaturdurchlauf)
   ∘ Messwertaufnahme: Nach 30 Sekunden Prüfzeit

Tabelle 2 zeigt die Werte für den Rollwiderstands-Indikator und die Nässeperformance-Indikatoren der Gummimaterialien, welche aus den in Tabelle 1 angegebenen Kautschukmischungen gefertigt sind. Ferner enthält Tabelle 2 Bereiche zu den Indikatoren, welche das Gummimaterial der radial äußeren Laufstreifenschicht 1a allgemein bzw. bevorzugt aufweist.

**Tabelle 2: Vulkanisateigenschaften / Indikatoren**

| **Vulkanisateigenschaft** | **Norm** | **Einheit** | **E1** | **E2** | **Bereich** | **bevorzugter Bereich** |
|---|---|---|---|---|---|---|
| Nässeperformance-Indikator | | | | | | |
| R (23°C) | ISO 4662 | % | 47,0 | 56,7 | 43,0 bis 59,0 | 45,0 bis 52,0 |

| Rollwiderstands-Indikatoren | | | | | | |
|---|---|---|---|---|---|---|
| R (70°C) | ISO 4662 | % | 63,5 | 68,1 | 60,0 bis 75,0 | 66,0 bis 72,0 |
| tan d (70°C) | ISO 4664-1 | - | 0,106 | 0,077 | 0,060 bis 0,120 | 0,070 bis 0,090 |

Wie Tabelle 2 zu entnehmen ist, zeichnen sich die exemplarischen Gummimaterialen aus den Kautschukmischungen E1 und E2 bzw. das "allgemeine Gummimaterial" (angegebene Bereiche) dadurch aus, dass diese bzw. dieses einen entsprechend großen Wert für die Rückprallelastizität R (70°C), einen entsprechend geringen Werte für den Verlustfaktor tan d (70°C) und einen entsprechend geringen Wert für die Rückprallelastizität R (23°C) aufweisen bzw. aufweist. Ein Fahrzeugreifen mit einem Laufstreifen mit einer aus einer entsprechender Kautschukmischung gefertigten, radial äußeren Laufstreifenschicht 1a lässt daher einen Fahrzeugreifen mit eine vorteilhaften Balance zwischen Rollwiderstand und Nässeperformance erwarten.

### 3. Profil des Laufstreifens

Gemäß Fig. 1 weist der Laufstreifen 1 eine zentrale Profilrippe 2, zwei halbmittige Profilrippen 3 und zwei schulterseitige Profilrippen 4 auf, wobei die zentrale Profilrippe 2 zu den halbmittigen Profilrippen 3 durch mittlere Umfangsrillen 5 und die halbmittigen Profilrippen 3 zu den schulterseitigen Profilrippen 4 durch schulterseitige Umfangsrillen 6 getrennt sind. Die halbmittigen Profilrippen 3 und die schulterseitigen Profilrippen 4 sind lediglich schematisch (unstrukturiert) dargestellt und können in insbesondere bekannter Weise mit Profilnegativen, wie Rillen und Einschnitten, versehen sein. Jede Profilrippe 2, 3, 4 weist eine in der Laufstreifenperipherie liegende Rippenaußenfläche 2a, 3a, 4a auf.

Die zentrale Profilrippe 2 weist eine am Niveau der Rippenaußenfläche 2a in axialer Richtung ermittelte Breite b_{PR} auf und ist mit einer Vielzahl von über ihren Umfang verteilt ausgebildeten, von der Rippenaußenfläche 2a ausgehenden, in radialer Richtung in ihr Inneres hineinragenden, in Draufsicht parallel zueinander verlaufenden Einschnitten 13 versehen, welche die zentrale Profilrippe 2 durchqueren und dieser Rippenblöcke 2b verleihen.

Wie bereits erwähnt, befindet sich die komplette Profilierung, also die Profilnegative, des Laufstreifens 1, innerhalb der radial äußeren Laufstreifenschicht 1a, sodass die mittleren Umfangsrillen 5, die schulterseitigen Umfangsrillen 6 und die Einschnitte 13 jeweils ausschließlich innerhalb der radial äußeren Laufstreifenschicht 1a ausgebildet sind (siehe Fig. 3 und Fig. 4).

Die Umfangsrillen 5, 6 verlaufen beim gezeigten Ausführungsbeispiel, in Draufsicht betrachtet, gerade und weisen in radialer Richtung eine maximale Tiefe T_{P} (Tiefe an der tiefsten Stelle, Fig. 3, Fig. 4: Gezeigt für eine mittlere Umfangsrille 5) von 70% bis 100% der Profiltiefe auf, wobei die Profiltiefe für den bevorzugten Reifentyp (Nutzfahrzeugreifen) üblicherweise 9,0 mm bis 26,0 mm, insbesondere 12,0 mm bis 20,0 mm, beträgt. Die Profiltiefe ist dabei die Tiefe der tiefsten Umfangsrille(n) und ist bekannterweise jene Tiefe nach welcher sich die jeweils gesetzlich vorgeschriebene Mindestprofiltiefe innerhalb der EU richtet. Die maximale Tiefe T_{P} definiert ein parallel zur Laufstreifenperipherie verlaufendes, tiefstes Umfangsrillenniveau N_{P} (Fig. 3, Fig. 4).

Die schulterseitigen Umfangsrillen 6 weisen einen U-förmigen Querschnitt auf (nicht zu sehen) und sind jeweils durch einen Rillengrund 6a und zwei Rillenflanken 6b begrenzt (Fig. 1).

### 3.1 Beschreibung der mittleren Umfangsrillen 5

Die Ausgestaltung der mittleren Umfangsrillen 5 wird nachfolgend anhand einer einzelnen mittleren Umfangsrille 5 erläutert.

Gemäß Fig. 4 setzt sich die mittlere Umfangsrille 5, im in Draufsicht in axialer Richtung ausgerichteten Querschnitt betrachtet (vergl. Lage der Linie III-III in Fig. 2), aus einem radial äußeren Abschnitt 7 und einem radial inneren Kanal 8 zusammen. Die nachfolgenden Ausführungen zur Umfangsrille 5, also zum radial äußeren Abschnitt 7 und zum radial inneren Kanal 8, beziehen sich auf den erwähnten Querschnitt.

Die Umfangsrille 5 ist bezüglich einer in radialer Richtung verlaufenden Linie L symmetrisch ausgeführt, sodass folglich der radial äußere Abschnitt 7 und der radial innere Kanal 8 jeweils bezüglich der Linie L symmetrisch gestaltet sind.

Der radial äußere Abschnitt 7 weist - bezogen auf die Linie L - in radialer Richtung eine Erstreckungslänge c₁ von 30% bis 65%, insbesondere von 35% bis 55%, bevorzugt von 40% bis 50%, der maximalen Tiefe T_{P} der Umfangsrille 5 sowie in axialer Richtung eine minimale Breite bₘᵢₙ (Breite an der schmälsten Stelle) von 0,40 mm bis 3,00 mm, insbesondere von 0,50 mm bis 2,50 mm, bevorzugt von 0,80 mm bis 1,20 mm, auf und setzt sich beim gezeigten Ausführungsbeispiel in radialer Richtung aus einem von der Laufstreifenperipherie ausgehenden, fasenartig verbreiterten Abschnittteil 7a und einem in den radial inneren Kanal 8 einmündenden, einschnittartig verengten Abschnittteil 7b zusammen.

Der fasenartig verbreiterte Abschnittteil 7a weist die Form eines gleichschenkeligen Trapezes auf, verbreitert sich V-förmig in Richtung zu den Rippenaußenflächen 2a, 3a, weist am Niveau der Rippenaußenflächen 2a, 3a, also an der Laufstreifenperipherie, in axialer Richtung eine maximale Breite bₐ (Breite an der breitesten Stelle), an seinem radial inneren Ende, also am Anschluss zum verengten Abschnittteil 7b, in axialer Richtung die minimale Breite bₘᵢₙ und - bezogen auf die Linie L - in radialer Richtung eine Erstreckungslänge c₁ₐ von 25% bis 50%, insbesondere von 30% bis 45%, der Erstreckungslänge c₁ des radial äußeren Abschnitts 7 auf. Der fasenartig verbreiterte Abschnittteil 7a ist durch zwei Flanken 9 begrenzt, welche gerade sowie zur radialen Richtung jeweils unter einem Winkel α von 20° bis 60°, insbesondere von 30° bis 50°, verlaufen. Die minimale Breite bₘᵢₙ, die Erstreckungslängen c₁, c₁ₐ sowie der Winkel α sind vorzugsweise derart aufeinander abgestimmt, dass die maximale Breite bₐ 250% bis 750%, insbesondere 270% bis 650%, bevorzugt 300% bis 500%, der minimalen Breite bₘᵢₙ beträgt.

Der verengte Abschnittteil 7b verläuft gerade sowie in radialer Richtung, ist durch zwei in radialer Richtung verlaufende Flanken 10 begrenzt, weist in axialer Richtung die erwähnte minimale Breite bₘᵢₙ und - bezogen auf die Linie L - in radialer Richtung eine Erstreckungslänge c_{1b} auf, deren Größe aus den Erstreckungslängen c₁, c₁ₐ folgt.

Der radial innere Kanal 8 weist eine größere Querschnittsfläche als der radial äußere Abschnitt 7 auf, ist in axialer Richtung breiter als dieser ausgeführt, setzt sich aus einem radial äußeren Kanalabschnitt 8a und einem radial inneren Kanalabschnitt 8b zusammen, weist am gegenseitigen Anschluss der Kanalabschnitte 8a, 8b, welcher der breitesten Stelle des radial inneren Kanals 8 entspricht, in axialer Richtung eine Breite bₘₐₓ von 150% bis 650%, insbesondere von 200% bis 600%, bevorzugt von 300% bis 500%, besonders bevorzugt von 350% bis 450%, der minimalen Breite bₘᵢₙ sowie - bezogen auf die Linie L - in radialer Richtung eine Erstreckungslänge c₂ von 35% bis 70%, insbesondere von 45% bis 65%, bevorzugt von 50% bis 60%, der maximalen Tiefe T_{P} der Umfangsrillen 3 auf. Bevorzugt sind die Erstreckungslänge c₂ und die Breite bₘₐₓ derart aufeinander abgestimmt, dass die Erstreckungslänge c₂ mindestens 75%, insbesondere mindestens 100%, bevorzugt mindestens 105%, besonders bevorzugt mindestens 110%, der Breite bₘₐₓ beträgt.

Die Stelle der Breite bₘₐₓ definiert ein parallel zur Laufstreifenperipherie verlaufendes, mittleres Umfangsrillenniveau N_{bmax}, welches zum tiefsten Umfangsrillenniveau N_{P} einen in radialer Richtung ermittelten Abstand a₁ von 35% bis 85%, insbesondere von 50% bis 70%, der Erstreckungslänge c₂ des radial inneren Kanals 8 aufweist.

Der radial innere Kanal 8 ist von einem auf die maximale Tiefe T_{P} der Umfangsrille 5 reichenden, gleichzeitig den Rillengrund der Umfangsrille 5 bildenden Kanalgrund 11 und zwei Kanalwänden 12 begrenzt.

Der Kanalgrund 11 verläuft, im in Draufsicht in axialer Richtung ausgerichteten Querschnitt betrachtet, flach U-förmig gerundet und setzt sich, in diesem Querschnitt betrachtet, aus einem zentralen, am tiefsten Umfangsrillenniveau N_{P} verlaufenden Grundabschnitt 11a mit einer in axialer Richtung ermittelten Breite b_{G} von 2,0 mm bis 5,0 mm, insbesondere von 2,5 mm bis 3,5 mm, und zwei durchgehend gebogen (kreisbogenförmig) verlaufenden, seitlichen Grundrundungen 11b zusammen, welche tangential (knickfrei) an den Grundabschnitt 11a anschließen.

Die eine Kanalwand 12 ist die zentrale Profilrippe 2 hineingewölbt und die andere Kanalwand 12 ist in die angrenzende, halbmittige Profilrippe 3 hineingewölbt, wobei die Kanalwände 12 insgesamt verkehrt und gekippt L-förmig sowie zwischen dem Kanalgrund 11, also der jeweiligen seitlichen Grundrundung 11b, und der jeweiligen Flanke 10 im verengten Abschnittteil 7b verlaufen. Entsprechend ihrer gewölbten Gestalt liegt bei jeder Kanalwand 12 eine zwischen dem radial äußeren Ende der Kanalwand 12 und dem radial inneren Ende der Kanalwand 12 gezogene, gerade verlaufende Hilfslinie h_{K} komplett innerhalb des radial inneren Kanals 8. Jede Kanalwand 12 weist eine im radial äußeren Kanalabschnitt 8a befindliche, gerade verlaufende, radial äußere Deckenflanke 12a und eine im radial inneren Kanalabschnitt 8b befindliche, gerade verlaufende, radial innere Seitenflanke 12b auf. Beim Ausführungsbeispiel weisen die Kanalwände 12 ferner jeweils zwei Übergangsrundungen 12c auf, von welchen eine zwischen der radial inneren Seitenflanke 12b und der radial äußeren Deckenflanke 12a und eine weitere zwischen der radial äußeren Deckenflanke 12a und der jeweiligen Flanke 10 im verengten Abschnittteil 7b verläuft.

Die radial äußeren Deckenflanken 12a verlaufen gerade sowie zur radialen Richtung jeweils unter einem Winkel β, wobei die Deckenflanken 12a bezüglich der radialen Richtung derart gegensinnig zueinander geneigt sind, dass sich ein in axialer Richtung zwischen den Deckenflanken 12a ermittelter, gegenseitiger Abstand in Richtung Kanalgrund 11 und daher in Richtung zum mittleren Umfangsrillenniveau N_{bmax} kontinuierlich vergrößert. Der radial äußere Kanalabschnitt 8a verbreitert sich daher ausgehend vom radial äußeren Abschnitt 7 fortlaufend in Richtung zum Kanalgrund 11 bis zum mittleren Umfangsrillenniveau N_{bmax}.

Die Seitenflanken 12b verlaufen zur radialen Richtung jeweils unter einem Winkel γ von 10° bis 25°, insbesondere von 15° bis 23°, bevorzugt von zumindest 17°, wobei sich ein in axialer Richtung zwischen den Seitenflanken 12b ermittelter gegenseitiger Abstand in Richtung Kanalgrund 11 kontinuierlich verkleinert. Der radial innere Kanalabschnitt 8b verschmälert sich daher ausgehend vom mittleren Umfangsrillenniveau N_{bmax} fortlaufend in Richtung zum Kanalgrund 11. Bevorzugter Weise sind der Abstand a₁, die maximale Breite bₘₐₓ und die Erstreckungslänge c₂ derart aufeinander abgestimmt, dass der Winkel β 50° bis 70°, insbesondere 55° bis 60°, beträgt.

Die Grundrundungen 11b sowie die Übergangsrundungen 12c stellen tangentiale (knickfrei) Übergänge zwischen den jeweiligen Begrenzungsflächen (zwischen dem Grundabschnitt 11a und den radial inneren Seitenflanken 12b, zwischen den radial inneren Seitenflanken 12b und den radial äußeren Deckenflanken 12a sowie zwischen den radial äußeren Deckflanken 12a und den Flanken 10) sicher und verlaufen insbesondere jeweils entlang eines Radius von vorzugsweise 1,0 mm bis 2,0 mm.

### 3.2 Beschreibung der Einschnitte 13

Die weitere Ausgestaltung der bereits erwähnten Einschnitte 13 wird nachfolgend anhand eines einzelnen Einschnitts 13 erläutert.

Wie Fig. 2 in Kombination mit Fig. 3 zeigt, weist der Einschnitt 13 zwei an der Rippenaußenfläche 2a liegende Draufsicht parallel zueinander sowie beim Ausführungsbeispiel gerade verlaufende Einschnittkanten 13a auf, wobei der Einschnitt 13 durch an die Einschnittkanten 13a anschließende, in radialer Richtung verlaufende Einschnittwände 13b und einen zwischen den radial inneren Enden der Einschnittwände 13b verlaufenden Einschnittgrund 13c (Fig. 3) begrenzt ist. Gemäß Fig. 2 weist der Einschnitt 13, in Draufsicht betrachtet, eine am Niveau der Rippenaußenfläche 2b, also am Niveau der Laufstreifenperipherie, liegende, übereinstimmend zu den Einschnittkanten 13a beabstandete - entsprechend der gerade verlaufende Einschnittkanten 13a - beim Ausführungsbeispiel gerade verlaufende Einschnittmittellinie M_{E}, ferner eine an die Einschnittmittellinie M_{E} anschließende in radialer Richtung ausgerichtete Längsschnitt-Mittelfläche F₁ und eine in radialer Richtung ausgerichtete, orthogonal zur Längsschnitt-Mittelfläche F₁ verlaufende Querschnitt-Mittelfläche F₂ (vergl. Fig. 3) auf, wobei der Einschnitt 13 beim Ausführungsbeispiel symmetrisch bezüglich der Längsschnitt-Mittelfläche F₁ und symmetrisch bezüglich der Querschnitt-Mittelfläche F₂ ausgeführt ist.

Der Einschnitt 13 kann gemäß alternativen Ausführungen, in Draufsicht betrachtet und bezogen auf die Einschnittmittellinie M_{E}, beispielsweise zumindest abschnittsweise wellenförmig, zumindest abschnittsweise in Form eines basisfreien Trapezes und/oder durchgehend (also insgesamt) gebogen (bogenförmig) verlaufen, sodass die Einschnittmittellinie M_{E} nicht mehr gerade verläuft. Der Einschnitt 13 weist ferner eine in Draufsicht gerade sowie zwischen den Enden der Einschnittmittellinie M_{E} verlaufende Einschnittbasislinie B_{E} auf, welche beim Ausführungsbeispiel mit der Einschnittmittellinie M_{E} zusammenfällt.

Der unter Punkt 3 erwähnte, in Draufsicht vorliegende parallele Verlauf der Einschnitte 13 bezieht sich auf die Einschnittbasislinien B_{E}.

Wie Fig. 2 zeigt, verläuft der Einschnitt 13, in Draufsicht betrachtet und bezogen auf die Einschnittbasislinie B_{E}, zur axialen Richtung unter einem Winkel δ von 0° bis 50°, insbesondere von 5° bis 40°, bevorzugt von 20° bis 35°. Der Einschnitt 13 weist eine als kleinstmöglichen Abstand zwischen Einschnittwänden 13b, daher senkrecht zur Längsschnitt-Mittelfläche F₁ gemessene, konstante Breite b_{E} von 0,40 mm bis 2,00 mm, insbesondere von 0,60 mm bis 1,80 mm, bevorzugt von 0,80 mm bis 1,60 mm, besonders bevorzugt von bis zu 1,20 mm, in radialer Richtung eine maximale Tiefe t_{Emax} (Fig. 3, Tiefe an der tiefsten Stelle) von 80% bis 110% der maximalen Tiefe T_{P} der Umfangsrillen 5, insbesondere von höchstens 100% der maximalen Tiefe T_{P}, und bevorzugt höchstens der um 1,00 mm verringerten maximalen Tiefe T_{P} sowie eine entlang der Einschnittmittellinie M_{E} ermittelte Länge c_{E} auf.

Gemäß Fig. 3 setzt sich der Einschnitt 13, in Draufsicht betrachtet (vergl. Fig. 2), entlang seiner Einschnittmittellinie M_{E} (Fig. 2) aus einem zentralen, tiefsten Einschnittabschnitt 13₁ und zwei randseitigen, jeweils radial außerhalb einer lokalen Grundanhebung 14 verlaufenden, daher in radialer Richtung angehobenen und somit gegenüber dem tiefsten Einschnittabschnitt 13₁ in radialer Richtung weniger tief ausgeführten, seichten Einschnittabschnitten 13₂ zusammen. Jede Grundanhebung 14 erstreckt sich zwischen der jeweiligen mittleren Umfangsrille 5 und dem tiefsten Einschnittabschnitt 13₁, ist von der Rippenaußenfläche 2a beabstandet und reicht bis zu den Einschnittwänden 13b.

Der tiefste Einschnittabschnitt 13₁ weist eine in Draufsicht entlang dem Verlauf der Einschnittmittellinie M_{E} (vergl. Fig. 2 und Lage der Linie III-III) ermittelte Länge c_{E1} auf, reicht über seine komplette Länge c_{E1} in radialer Richtung auf die maximale Tiefe t_{Emax} und ist in radialer Richtung durch einen auf der maximale Tiefe t_{Emax} verlaufenden, zentralen Grundabschnitt 13c₁ des Einschnittgrunds 13c begrenzt.

Jeder seichte Einschnittabschnitt 13₂ weist eine in Draufsicht entlang dem Verlauf der Einschnittmittellinie M_{E} (vergl. Fig. 2 und Lage der Linie III-III) ermittelte Länge c_{E2} auf und ist durch einen parallel zur Rippenaußenfläche 2a verlaufenden, angehobenen Grundabschnitt 13c₃ und einen relativ zur Rippenaußenfläche 2a geneigt verlaufenden Grundabschnitt 13c₂ begrenzt. Die Summe der beiden Längen c_{E2} beträgt 30% bis 80%, insbesondere 40% bis 70%, bevorzugt zumindest 50%, der Länge c_{E} des Einschnitts 13.

Der angehobene Grundabschnitt 13c₃ befindet sich in einer in radialer Richtung ermittelten, konstanten, minimalen Tiefe t_{Emin} (Fig. 4, Tiefe an der seichtesten Stelle des Einschnitts 13) und weist eine in Draufsicht entlang dem Verlauf der Einschnittmittellinie M_{E} (vergl. Fig. 2 und Lage der Linie III-III) ermittelte Länge c_{E3} von 60% bis 100%, insbesondere von 70% bis 90%, der Länge c_{E2} des seichten Einschnittabschnitts 13₂ auf. Die minimale Tiefe t_{Emin} definiert ein parallel zur Laufstreifenperipherie verlaufendes, radial äußeres Einschnitttiefenniveau N_{Emin}.

Der Grundabschnitt 13c₂ fällt ausgehend vom Grundabschnitt 13c₃ fortlaufend in Richtung zum Niveau der maximalen Tiefe t_{Emax} ab, nähert sich daher fortlaufend dem zentralen Grundabschnitt 13c₁ an, verläuft beim Ausführungsbeispiel langgezogen S-förmig geschwungen und schließt tangential an das einschnittinnenseitige Ende des angehobenen Grundabschnitts 13c₃ sowie tangential an das jeweilige Ende des zentralen Grundabschnitts 13c₁ an. In Folge des langgezogen S-förmig geschwungenen Verlaufs des Grundabschnitts 13c₂ ist die Länge c_{E3} des angehobenen Grundabschnitts 13c₃ beim Ausführungsbeispiel kleiner als 100% der Länge c_{E2}.

Gemäß Fig. 4 ist die minimale Tiefe t_{Emin} jedes seichten Einschnittabschnitts 13₂ derart ausgeführt, dass das zugehörige radial äußere Einschnitttiefenniveau N_{Emin} am oder radial innerhalb des mittleren Umfangsrillenniveaus N_{bmax} sowie radial außerhalb des tiefsten Umfangsrillenniveaus N_{P} liegt, wobei das radial äußere Einschnitttiefenniveau N_{Emin} zum tiefsten Umfangsrillenniveau N_{P} einen in radialer Richtung ermittelten Abstand a₂ von zumindest 1,00 mm, insbesondere von zumindest 2,00 mm, aufweist. Bevorzugt weist das radial äußere Einschnitttiefenniveau N_{Emin} vom mittleren Umfangsrillenniveau N_{bmax} einen in radialer Richtung ermittelten Abstand a₃ vom zumindest 1,00 mm auf. Die bereits erwähnte maximale Tiefe t_{Emax} des Einschnitts 13, welche gleichzeitig der Tiefe des tiefsten Einschnittabschnitts 13₁ entspricht, ist im Hinblick auf die Lage des radial äußeren Einschnitttiefenniveaus N_{Emin} in entsprechender angepasster Weise im angegebenen Bereich ausgeführt. Besonders bevorzugt trifft das radial äußere Einschnitttiefenniveau N_{Emin} auf die radial innere Seitenflanken 12b, sodass der Grundabschnitt 13c₃ mit der jeweiligen Seitenflanke 12b zusammentrifft.

### 3.3 Beschreibung von Einschnitten 13'

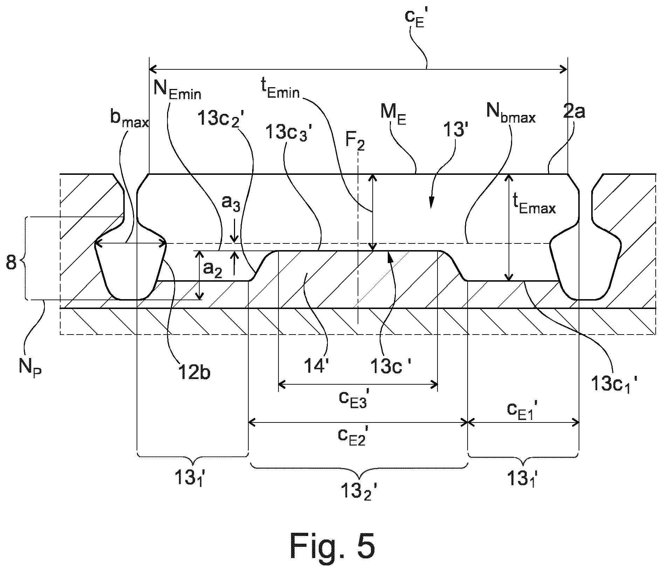

Fig. 5 zeigt eine analoge Ansicht zur Fig. 3 mit einem Einschnitt 13', welcher eine Alternativ zum Einschnitt 13 (Fig. 3) bildet. Der Einschnitt 13' weist einen Einschnittgrund 13c' auf.

Der Einschnitt 13' setzt sich, in Draufsicht betrachtet, entlang seiner Einschnittmittellinie M_{E} (angedeutet) aus zwei randseitigen, tiefsten Einschnittabschnitten 13₁' und einem zentralen, radial außerhalb einer Grundanhebung 14' verlaufenden, daher in radialer Richtung angehobenen und somit gegenüber den tiefsten Einschnittabschnitten 13₁' in radialer Richtung weniger tief ausgeführten, seichten Einschnittabschnitt 13₂' zusammen.

Die tiefsten Einschnittabschnitte 13₁' weisen jeweils eine in Draufsicht entlang dem Verlauf der Einschnittmittellinie M_{E} ermittelte Länge c_{E1}' auf, reichen über ihre komplette Länge c_{E1}' in radialer Richtung auf die maximale Tiefe t_{Emax} (Tiefe an der tiefsten Stelle des Einschnitts 13') und sind in radialer Richtung jeweils durch einen auf der maximale Tiefe t_{Emax} verlaufenden, randseitigen Grundabschnitt 13c₁' des Einschnittgrunds 13c' begrenzt.

Der seichte Einschnittabschnitt 13₂' weist eine in Draufsicht entlang dem Verlauf der Einschnittmittellinie M_{E} ermittelte Länge c_{E2}' von 30% bis 80%, insbesondere von 40% bis 70%, bevorzugt von zumindest 50%, der Länge c_{E}' des Einschnitts 13' auf, ist durch einen parallel zur Rippenaußenfläche 2a verlaufenden, angehobenen Grundabschnitt 13c₃' und seitlich durch zwei relativ zur Rippenaußenfläche 2a geneigt verlaufenden Grundabschnitt 13c₂' begrenzt. Der angehobene Grundabschnitt 13c₃' befindet sich in einer in radialer Richtung ermittelten, konstanten, minimalen Tiefe t_{Emin} (Tiefe an der seichtesten Stelle des Einschnitts 13') und weist eine in Draufsicht entlang dem Verlauf der Einschnittmittellinie M_{E} ermittelte Länge c_{E3}' von 60% bis 100%, insbesondere von 70% bis 90%, der Länge c_{E2}' auf. Die minimale Tiefe t_{Emin} definiert ein parallel zur Laufstreifenperipherie verlaufendes radial äußeres Einschnitttiefenniveau N_{Emin}. Die Grundabschnitt 13c₂' sind analog zum Grundabschnitt 13c₂ (Fig. 3) ausgeführt, sodass die Länge c_{E3}' kleiner als 100% der Länge c_{E2}' ist.

Die Tiefe t_{Emin} des seichten Einschnittabschnitts 13₂' ist derart ausgeführt, dass das zugehörige radial äußere Einschnitttiefenniveau N_{Emin} am oder radial innerhalb des mittleren Umfangsrillenniveaus N_{bmax} sowie radial außerhalb des tiefsten Umfangsrillenniveaus N_{P} liegt, wobei das radial äußere Einschnitttiefenniveau N_{Emin} zum tiefsten Umfangsrillenniveau N_{P} einen in radialer Richtung ermittelten Abstand a₂ von zumindest 1,00 mm, insbesondere von zumindest 2,00 mm, aufweist. Ferner ist es bevorzugt, wenn das radial äußere Einschnitttiefenniveau N_{Emin} zum mittleren Umfangsrillenniveau N_{bmax} einen in radialer Richtung ermittelten Abstand a₃ vom zumindest 1,00 mm aufweist.

Die bereits erwähnte, maximale Tiefe t_{Emax} des Einschnitts 13' ist im Hinblick auf die Lage des radial äußeren Einschnitttiefenniveaus N_{Emin} in entsprechender angepasster Weise ausgeführt. Besonders bevorzugt trifft das radial äußere Einschnitttiefenniveaus N_{Emin} auf die Seitenflanke 12b.

### 4. Weitere Ausführungsbeispiele

Die Erfindung ist auf die beschriebenen Ausführungsbeispiele nicht beschränkt.

Der Laufstreifen 1 kann in radialer Richtung zusätzlich zu den Laufstreifenschichten 1a, 1b eine oder mehrere weitere Laufstreifenschichten aufweisen. Ferner kann der Laufstreifen 1 in radialer Richtung einschichtig ausgeführt sein (Monolaufstreifen), wobei bei dieser Variante der komplette Laufstreifen 1 aus dem oben unter Punkt 2 im Zusammenhang mit der radial äußeren Laufstreifenschicht 1a erläuterten Gummimaterial besteht.

Es ist zumindest eine Profilrippe vorgesehen, welche an zumindest einer Seite von einer entsprechend ausgeführten Umfangsrille begrenzt und mit entsprechend in die Umfangsrille einmündenden Einschnitten versehen ist, sodass die Einschnitte auch in schulterseitigen Profilrippen ausgebildet sein können. Ferner müssen die Einschnitte in Draufsicht nicht parallel zueinander verlaufen. Die Einschnitte können mit lokal ausgebildeten Einschnittkanälen verbreitert sein.

Die Einschnitte weisen zumindest einen auf die maximale Tiefe t_{Emax} (Tiefe an der tiefsten Stelle des Einschnitts) reichenden, tiefsten Einschnittabschnitt und einen gegenüber diesem seichter ausgeführten, seichten Einschnittabschnitt mit einem angehobene Grundabschnitt auf, welcher in einer in radialer Richtung ermittelten, konstanten, minimalen Tiefe t_{Emin} (Tiefe an der seichtesten Stelle des Einschnitts) verläuft, auf.

Der radial äußere Abschnitt 7 der Umfangsille(n) kann ohne verbreiterten Abschnittteil 7a ausgeführt sein, sodass der radial äußere Abschnitt 7 ausschließlich vom einschnittartig verengten Abschnittteil 7b gebildet ist, welcher bei dieser Ausführung somit bis zur Laufstreifenperipherie reicht. Die bzw. jede Umfangsrille kann, im Querschnitt betrachtet, bezüglich einer in radialer Richtung verlaufenden Linie asymmetrisch ausgeführt sein.

Die Profilrippe kann mit gegenüber den Einschnitten breiter ausgeführten Querrillen versehen sein.

### Bezugszeichenliste

- 1: Laufstreifen
- 1a: radial äußere Laufstreifenschicht
- 1b: radial innere Laufstreifenschicht
- 1c: Materialgrenze
- 2: zentrale Profilrippe
- 2a: Rippenaußenfläche
- 2b: Rippenblock
- 3: halbmittige Profilrippe
- 3a: Rippenaußenfläche
- 4: schulterseitige Profilrippe
- 4a: Rippenaußenfläche
- 5: mittlere Umfangsrille
- 6: schulterseitige Umfangsrille
- 6a: Rillengrund
- 6b: Rillenflanke
- 7: radial äußerer Abschnitt
- 7a: fasenartig verbreiterter Abschnittteil
- 7b: einschnittartig verengter Abschnittteil
- 8: radial innerer Kanal
- 8a: radial äußerer Kanalabschnitt
- 8b: radial innerer Kanalabschnitt
- 9: Flanke
- 10: Flanke
- 11: Kanalgrund
- 11a: Grundabschnitt
- 11b: Grundrundung
- 12: Kanalwand
- 12a: radial äußere Deckenflanke
- 12b: radial innere Seitenflanke
- 12c: Übergangsrundung
- 13: Einschnitt
- 13': Einschnitt
- 13₁: tiefster Einschnittabschnitt
- 13₁': tiefster Einschnittabschnitt
- 13₂: seichter Einschnittabschnitt
- 13₂': seichter Einschnittabschnitt
- 13a: Einschnittkante
- 13b: Einschnittwand
- 13c: Einschnittgrund
- 13c': Einschnittgrund
- 13c₁: zentraler Grundabschnitt
- 13c₁': randseitiger Grundabschnitt
- 13c₂: Grundabschnitt
- 13c₂': Grundabschnitt
- 13c₃: angehobener Grundabschnitt
- 13c₃': angehobener Grundabschnitt
- 14, 14': Grundanhebung
- A-A: Linie (Reifenäquatorialebene)
- a₁, a₂, a₃: Abstand
- bₐ: maximale Breite
- bₘᵢₙ: minimale Breite
- b_{E}, b_{G}, bₘₐₓ, b_{PR}: Breite
- B_{E}: Einschnittbasislinie
- c₁, c₁ₐ, c_{1b}, c₂: Erstreckungslänge
- c_{E}, c_{E1}, c_{E2}, c_{E3}: Länge
- c_{E1}', c_{E2}', c_{E3}': Länge
- F₁: Längsschnitt-Mittelfläche
- F₂: Querschnitt-Mittelfläche
- h_{K}: Hilfslinie
- L: Linie
- M_{E}: Einschnittmittellinie
- N_{bmax}: mittleres Umfangsrillenniveau
- N_{Emin}: radial äußeres Einschnitttiefenniveau
- N_{P}: tiefstes Umfangsrillenniveau
- t_{Emax}: maximale Tiefe
- t_{Emin}: minimale Tiefe
- T_{P}: maximale Tiefe
- Z₂, Z₄: Detail
- α, β, γ, δ: Winkel

## Patentansprüche

1. Fahrzeugreifen, insbesondere Nutzfahrzeugreifen, mit einem profilierten Laufstreifen (1) umfassend ein die Profilierung enthaltendes Gummimaterial (1a) sowie mit mindestens einer an zumindest einer Seite von einer Umfangsrille (5) begrenzten Profilrippe (2),
wobei die Umfangsrille (5), im Querschnitt betrachtet, aus einem radial äußeren Abschnitt (7) mit einer minimalen Breite (bₘᵢₙ) von 0,40 mm bis 3,00 mm und einem radial inneren Kanal (8) zusammengesetzt ist und eine ein tiefstes Umfangsrillenniveau (N_{P}) festlegende, in radialer Richtung ermittelte, maximale Tiefe (T_{P}) von 70% bis 100% der Profiltiefe aufweist,
wobei der radial innere Kanal (8) eine größere Querschnittsfläche als der radial äußere Abschnitt (7), eine in radialer Richtung ermittelte Erstreckungslänge (c₂) und eine breiteste Stelle auf einem mittleren Umfangsrillenniveau (N_{bmax}) aufweist, wobei die breiteste Stelle eine parallel zur Laufstreifenperipherie ermittelte Breite (bₘₐₓ) von 150% bis 650% der minimalen Breite (bₘᵢₙ) und das mittlere Umfangsrillenniveau (N_{bmax}) zum tiefsten Umfangsrillenniveau (N_{P}) in radialer Richtung einen Abstand (a₁) von 35% bis 85% der Erstreckungslänge (c₂) des radial inneren Kanals (8) aufweist,
wobei die Profilrippe (2) mit in die Umfangsrille (5) einmündenden Einschnitten (13, 13') versehen ist, welche eine Breite (b_{E}) 0,40 mm bis 2,00 mm, eine an der bzw. den tiefste(n) Stelle(n) vorliegende, maximale Tiefe (t_{Emax}) von 80% bis 110% der maximalen Tiefe (T_{P}) der Umfangsrille (5), eine an der bzw. den seichteste(n) Stelle(n) vorliegende, minimale Tiefe (t_{Emin}) auf einem radial äußeren Einschnitttiefenniveau (N_{Emin}), einen Einschnittgrund (13c, 13c'), zumindest einen auf die maximale Tiefe (t_{Emax}) reichenden, tiefsten Einschnittabschnitt (13₁, 13₁') und zumindest einen seichten Einschnittabschnitt (13₂, 13₂') mit einem am radial äußeren Einschnitttiefenniveau (N_{Emin}) verlaufenden, angehobenen Grundabschnitt (13c₃, 13c₃') des Einschnittgrunds (13c, 13c') aufweisen,
**dadurch gekennzeichnet,**
**dass** das radial äußere Einschnitttiefenniveau (N_{Emin}) am oder radial innerhalb des mittleren Umfangsrillenniveaus (N_{bmax}) sowie radial außerhalb des tiefstes Umfangsrillenniveaus (N_{P}) liegt,
wobei das die Profilierung enthaltende Gummimaterial (1a) des Laufstreifens (1)
a) eine Rückprallelastizität bei 23°C (R (23°C)), ermittelt nach ISO 4662, von 43,0 bis 59,0,
b) eine Rückprallelastizität bei 70°C (R (70°C)), ermittelt nach ISO 4662, von 60,0 bis 75,0 und
c) einen Verlustfaktor bei 70°C (tan d (70°C)), ermittelt nach ISO 4664-1, von 0,060 bis 0,120 aufweist.

2. Fahrzeugreifen nach Anspruch 1, **dadurch gekennzeichnet, dass** das radial äußere Einschnitttiefenniveau (N_{Emin}) zum tiefsten Umfangsrillenniveau (N_{P}) einen in radialer Richtung ermittelten Abstand (a₂) von zumindest 1,00 mm, insbesondere von zumindest 2,00 mm, aufweist.

3. Fahrzeugreifen nach Anspruch 1 oder 2, **dadurch gekennzeichnet, dass** das radial äußere Einschnitttiefenniveau (N_{Emin}) zum mittleren Umfangsrillenniveau (N_{bmax}) einen in radialer Richtung ermittelten Abstand (a₃) von zumindest 1,00 mm aufweist.

4. Fahrzeugreifen nach einem der Ansprüche 1 bis 3, **dadurch gekennzeichnet, dass** die Rückprallelastizität bei 23°C (R (23°C)) des die Profilierung enthaltenden Gummimaterials des Laufstreifens (1) 45,0 bis 52,0 beträgt.

5. Fahrzeugreifen nach einem der Ansprüche 1 bis 4, **dadurch gekennzeichnet, dass** die Rückprallelastizität bei 70°C (R (70°C)) des die Profilierung enthaltenden Gummimaterials des Laufstreifens (1) 66,0 bis 72,0 beträgt.

6. Fahrzeugreifen nach einem der Ansprüche 1 bis 5, **dadurch gekennzeichnet, dass** der Verlustfaktor bei 70°C (tan d (70°C)) des die Profilierung enthaltenden Gummimaterials des Laufstreifens (1) 0,070 bis 0,090 beträgt.

7. Fahrzeugreifen nach einem der Ansprüche 1 bis 6, **dadurch gekennzeichnet, dass** der bzw. die seichte(n) Einschnittabschnitt(e) (13₂, 13₂') eine bzw. jeweils eine entlang der Einschnittmittellinie (M_{E}) ermittelte Länge (c_{E2} c_{E2}') aufweist bzw. aufweisen, wobei die Länge (c_{E2}') des seichten Einschnittabschnitts (13₂') bzw. die Summe der Längen (c_{E2}) der seichten Einschnittabschnitte (13₂) 30% bis 80%, insbesondere 40% bis 70%, bevorzugt zumindest 50%, der entlang der Einschnittmittellinie (M_{E}) ermittelten Länge (c_{E}) des Einschnitts (13, 13') beträgt.

8. Fahrzeugreifen nach einem der Ansprüche 1 bis 7, **dadurch gekennzeichnet, dass** der Abstand (a₁), welchen das mittlere Umfangsrillenniveau (N_{bmax}) zum tiefsten Umfangsrillenniveau (N_{P}) in radialer Richtung aufweist, 50% bis 70% der in radialer Richtung ermittelten Erstreckungslänge (c₂) des radial inneren Kanals (8) beträgt.

9. Fahrzeugreifen nach einem der Ansprüche 1 bis 8, **dadurch gekennzeichnet, dass** die in radialer Richtung ermittelte Erstreckungslänge (c₂) des radial inneren Kanals (8) 35% bis 70%, insbesondere 45% bis 65%, bevorzugt 50% bis 60%, der maximalen Tiefe (T_{P}) der Umfangsrille (5) beträgt.

10. Fahrzeugreifen nach einem der Ansprüche 1 bis 9, **dadurch gekennzeichnet, , dass** die in radialer Richtung ermittelte Erstreckungslänge (c₂) des radial inneren Kanals (8) mindestens 75%, insbesondere mindestens 100%, bevorzugt mindestens 105%, besonders bevorzugt mindestens 110%, der Breite (bₘₐₓ) an der breitesten Stelle des radial inneren Kanals (8) beträgt.

11. Fahrzeugreifen nach einem der Ansprüche 1 bis 10, **dadurch gekennzeichnet,**
- **dass** sich die Einschnitte (13, 13') jeweils aus zwei der seichten Einschnittabschnitte (13₂, 13₂') und einem zwischen diesen ausgebildeten, tiefsten Einschnittabschnitt (13₁, 13₁') zusammengesetzt sind oder
- **dass** die Einschnitte (113, 13') jeweils aus zwei der tiefsten Einschnittabschnitte (13₁, 13₁') und einem zwischen diesen ausgebildeten, seichten Einschnittabschnitt (13₁, 13₁') zusammengesetzt sind.

12. Kautschukmischung für das die Profilierung enthaltende Gummimaterial des Laufstreifens (1) eines Fahrzeugreifens nach einem der Ansprüche 1 bis 11, welche folgende Bestandteile umfasst:
- Naturkautschuk(e) in einer Gesamtmenge von 70 phr bis 95 phr,
- Styrol-Butadien-Kautschuk(e) und/oder Polybutadien(e) in einer Gesamtmenge von 5 phr bis 30 phr,
- Kieselsäure(n) mit einer BET-Oberfläche von 180 m²/ bis 250 m²/g in einer Gesamtmenge 25 phr bis 70 phr, insbesondere von mindestens 30 phr, bevorzugt von mindestens 40 phr, und
- Silan(e).
